# FASCICULE DE BREVET EUROPEEN

(11) **EP 0 724 746 B1**
(45) Date de publication et mention de la délivrance du brevet: **27.01.1999**
(21) Numéro de dépôt: 94931063.5
(22) Date de dépôt: 13.10.1994
(51) Int. Cl.: G02C 13/00, G02C 3/04

(54) **DISPOSITIF DE CORRECTION DE LA VUE LORS DE L'ESSAYAGE DE MONTURES DE LUNETTES**
VORRICHTUNG ZUR SEHHILFE BEI DER BRILLENGESTELLAUSWAHL
SIGHT CORRECTION DEVICE FOR TRYING SPECTACLE FRAMES

(30) Priorité: 21.10.1993 FR 9312785
(43) Date de publication de la demande: 07.08.1996
(73) Titulaire: Martel, Michel, F-43000 Le Puy (FR)
(72) Inventeur: Martel, Michel, F-43000 Le Puy (FR)
(74) Mandataire: Vuillermoz, Bruno
(86) Numéro de dépôt international: FR9401190
(87) Numéro de publication internationale: WO9511474

(56) Documents cités:
- DE-U- 8 703 358
- DE-U- 9 114 655
- FR-A- 2 295 447
- GB-A- 734 522
- US-A- 1 884 371
- US-A- 2 872 843

## Description

L'invention concerne un dispositif original, destiné à permettre aux utilisateurs ou porteurs de montures de lunettes, l'essayage de telles montures lorsque celles-ci sont dépourvues de leurs verres correcteurs.

Lorsqu'une personne se rend chez un opticien, afin de se faire réaliser, notamment sur la base d'une ordonnance, une paire de lunettes munie de verres correcteurs, se pose le problème du choix d'une monture répondant essentiellement à des critères esthétiques purement personnels.

De fait, si l'opticien peut mettre à sa disposition une grande variété de montures, leur essayage, et notamment l'appréciation par l'utilisateur de la monture de l'aspect esthétique, pose problème, puisque, par essence même, les verres correcteurs ne sont pas réalisés et donc, ne sont pas en place au sein des montures essayées. Celles-ci sont en effet dépourvues de verres correcteurs.

De fait, l'utilisateur ne peut-il percevoir tout au plus qu'une vue floue ou trouble de son visage portant la monture considérée dans une glace, et de fait, ne peut pas apprécier de manière satisfaisante le rendu.

Afin de pallier ces inconvénients, on a proposé dans un premier temps, de mettre à la disposition des utilisateurs et donc essayeurs de montures de lunettes, des plaques réalisées en polymétacrylate de méthyl, sensiblement rectangulaires et munies d'un manche latéral, comportant deux oculaires, taillés dans la masse du polymétacrylate, et positionnés sensiblement au niveau des deux yeux.

En fonction de la taille effectuée pour la réalisation de ces oculaires, on aboutit ainsi à un jeu de plusieurs plaques en polymétacrylate de puissance correctrice différentes. En outre, afin de cumuler éventuellement plusieurs puissances correctrices, ces plaques peuvent être munies d'ergots et de saillies correspondantes, afin de permettre leur encastrement l'une dans l'autre, et ce notamment en cas de myopie.

Si certes, ces plaques en remplissent leur fonction première, à savoir assurer la correction de la vue lors de l'essayage de montures, en revanche, leur utilisation s'accompagne de nombreux inconvénients.

Tout d'abord, ce type de plaques se positionne devant la monture de lunettes, et de fait, se voit de manière beaucoup trop importante dans l'image réfléchie par un miroir ou une glace, et induit un effet masque important, inadapté en tous les cas pour pouvoir apprécier l'aspect esthétique de la monture sur le visage de l'utilisateur.

En outre, étant réalisées en polymétacrylate, d'une part, de telles plaques induisent un reflet important, altérant de manière supplémentaire la perception que reçoit l'utilisateur de l'image réfléchie, et en outre, sont rayables, de sorte qu'elles deviennent rapidement inefficaces en termes de correction.

De plus, la correction est la même pour chacun des deux ocuiaires, droit et gauche d'une même plaque. Or, il a pu être statistiquement montré, que très peu de personnes ont la même correction visuelle au niveau des deux yeux.

Par ailleurs, tous les systèmes binoculaires présentent un écartement standard entre les deux oculaires, qui ne correspond pas toujours, loin s'en faut, à l'écartement des yeux de l'utilisateur, et partant, ne permet pas d'obtenir la correction recherchée.

Enfin, l'utilisation d'une telle plaque détourne l'attention de l'utilisateur ou de l'essayeur sur elle-même, donc sur l'outil qui est sensé les aider à apprécier l'aspect esthétique de la monture en place sur leur propre visage.

En résumé, de telles plaques ne sont pas adaptées pour permettre aux utilisateurs d'apprécier efficacement l'essayage de montures.

On a aussi proposé dans le même but des binocles, également réalisées en polymétacrylate ou en acétate de cellulose, destinés à cercler des verres correcteurs biseautés stockés dans un drageoir. Ces binocles sont mis en place entre le visage et la monture, et sont maintenues par simple appui sur le nez et par la pression opérée par la monture essayée. Ce principe de maintien s'avère inefficace, et ne permet pas en outre d'essayer la monture envisagée selon sa position correcte.

Outre une mise en place délicate, longue et fastidieuse de ces binocles, de par leur système de solidarisation à la monture, celles-ci rendent l'interchangeabilité difficile des montures, n'aboutissant pas à un résultat satisfaisant en termes d'effet premier, et concourant au contraire à obtenir une esthétique "repoussante", puisque lesdites binocles sont bien visibles au niveau de l'image réfléchie par le miroir ou la glace devant laquelle se regarde l'essayeur.

Enfin, il existe également des systèmes du type vidéo, comprenant une caméra et un écran, assurant la réalisation de l'enregistrement du visage de l'utilisateur avec et sans monture, permettant à celui-ci de se visionner ultérieurement avec différentes montures, muni de ses lunettes antérieures de correction.

Outre la non possibilité d'une visualisation directe, ce type de dispositif est onéreux et en outre encombrant. Il ne permet pas, qui plus est, une visualisation directe du visage et de la monture dans un miroir en toute liberté, et ce, sans contrainte.

L'objet de l'invention est donc de proposer un dispositif s'affranchissant de ces différents inconvénients.

Ce dispositif de correction de la vue lors de l'essayage de montures de lunettes est constitué d'un jeu d'éléments de forme identique munis d'une poignée de préhension. Il se caractérise en ce que les éléments constitutifs dudit jeu sont sensiblement linéaires, l'une des extrémités formant poignée de préhension, et l'autre extrémité recevant un verre correcteur unique, de puissance de correction déterminée, dont les dimensions sont telles qu'elles lui permettent de venir se positionner lors de l'essayage en lieu et place du verre définitif à monter au sein de la monture, la puissance correctrice de l'ensemble des éléments ainsi constitué s'étageant au sein d'un intervalle défini selon une progression également définie.

En d'autres termes, l'invention consiste non plus à proposer des systèmes correcteurs des deux yeux simultanément, mais tout d'abord à procéder à la mise en place d'un verre correcteur au niveau de l'un des deux yeux, généralement l'oeil directeur, permettant de réaliser un outil très peu visible et n'affectant pas l'image réfléchie par le miroir ou la glace lors de l'essayage de la monture.

De nombreuses études optométriques ont en effet permis de montrer que tout individu possède un oeil directeur, qui lorsque les individus concernés ont même acuité visuelle des deux yeux correspond à la latéralité de celui-ci, mais dans les autres cas, c'est à dire dans les cas où les deux yeux de l'individu n'ont pas même acuité visuelle, correspond généralement à celui des deux qui a la meilleure acuité visuelle.

De la sorte, notamment lors des phases d'essayage, seule la correction de l'oeil directeur s'avère nécessaire et en tout cas suffisante pour permettre audit individu d'apprécier l'aspect esthétique de la monture sur son visage.

Avantageusement, le verre de correction fixé à l'extrémité par vissage et/ou par collage est de forme elliptique ou ovale, dont le grand axe est horizontal, de telle sorte à pouvoir être positionné au niveau de la zone correspondant aux verres définitifs des montures sans pour autant altérer la portée du champ visuel de l'individu concerné.

Ces verres sont avantageusement réalisés en matière organique incassable et inrayable, et en outre traités anti-reflets.

Selon une caractéristique fondamentale de l'invention, chacun des éléments n'est pas recti-linéaire et comprend trois zones distinctes mais continues, à savoir tout d'abord la poignée, puis la zone de support du verre, ces deux zones étant reliées par une zone intermédiaire formant bras.

Ces trois zones sensiblement linéaires sont concourantes, l'angle formé entre la poignée et la zone intermédiaire étant avantageusement compris entre 130 et 150 degrés, et préférentiellement entre 135 et 145 degrés, et l'angle entre la zone intermédiaire et le support étant avantageusement compris entre 100 et 120 degrés, et préférentiellement entre 105 et 115 degrés.

Ces valeurs ont été déterminées afin d'une part, de permettre un positionnement correct du verre de correction par l'individu, sans trop de tâtonnements, de telle sorte que celui-ci, lorsqu'il met en appui l'intersection de la poignée et du bras au voisinage du menton ou du bas de la joue, induise la mise en place quasi-automatique du verre correcteur au niveau approprié de la monture, et d'autre part, d'incliner légèrement ledit bras vers au-delà de la verticale par rapport à l'utilisateur, de telle sorte à induire la réflexion de la lumière vers le bas et non pas en direction du miroir, rendant celui-ci quasiment invisible. De fait, la longueur de la zone intermédiaire et du support est également déterminée pour aboutir à ces résultats.

Enfin, selon une autre caractéristique avantageuse de l'invention, la poignée présente une forme plate face à l'utilisateur, et bombée dans la direction opposée, notamment pour des raisons ergonomiques.

La manière dont l'invention peut être réalisée et les avantages qui en découlent ressortiront mieux de l'exemple de réalisation qui suit à titre indicatif et non limitatif à l'appui des figures annexées.

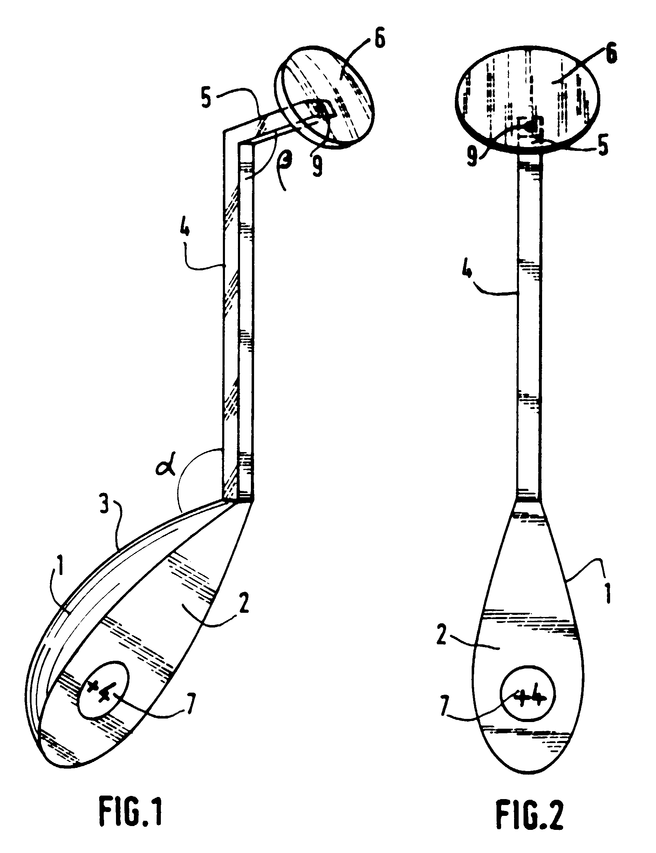

La figure 1 est une représentation sommaire en perspective de l'un des éléments conforme à l'invention, dont la figure 2 est une vue de face.

Le dispositif conforme à l'invention est constitué d'une pluralité de d'éléments, tels que représentés sur les figures 1 et 2. Typiquement, chacun de ces éléments est réalisé en polycarbonate, transparent à la lumière visible, et comporte trois parties continues issues du moulage, chacune des parties étant sensiblement linéaires.

Tout d'abord, la poignée (1) présente une face antérieure (2) et postérieure (3), la face postérieure (3) étant bombée afin de faciliter la préhension de l'élément par l'utilisateur.

Parallèlement, la face antérieure (2), plate, reçoit une pastille (7) en un autre matériau, tel que par exemple en acétate de cellulose, au niveau de laquelle est figurée la valeur algébrique de la puissance correctrice du verre de l'élément concerné, exprimée en dioptries .

Cette poignée (1) se prolonge par une zone intermédiaire de raccord ou bras (4), linéaire, formant avec ladite poignée (1) un angle α voisin de 140 degrés. Cette zone intermédiaire (4) présente une longueur typique comprise entre 8 et 11 cm pour les raisons exprimées ci-après.

Le bras (4) se prolonge à son tour par une zone linéaire de support (5), sensiblement de même section, formant avec le bras (4) un angle β, dont la valeur est comprise entre 105 et 115 degrés, avantageusement 110 degrés. La longueur de cette zone (5) est typiquement comprise entre 8 et 15 mm pour les mêmes raisons qu'exprimées ci-après.

Selon une caractéristique essentielle de l'invention, l'extrémité libre de la zone (5) reçoit un verre correcteur (6), dont la puissance de correction est indiquée, comme déjà dit, sur la pastille (7).

Ce verre (6) est fixé sur l'extrémité libre du support (5) par collage et/ou par vissage (9), notamment au niveau de sa zone inférieure. Il est réalisé en matière organique incassable, du type ORMA ou ORMEX (marques déposées par ESSILOR) et est, en outre, traité anti-rayures et anti-reflets.

Ce verre présente une forme elliptique ou ovale et son grand axe est sensiblement horizontal lorsque l'élément conforme à l'invention est utilisé correctement, afin d'une part, de permettre le positionnement du verre correcteur (6) au niveau du lieu de fixation définitive du verre sur la monture concernée, tout en permettant de conserver le champ visuel optimal de l'utilisateur. En d'autres termes, le verre (6) vient se positionner au même endroit que le verre définitif monté sur la monture.

Ces verres (6) sont minces, l'épaisseur au niveau de leur périphérie quelque soit la correction visuelle qu'ils induisent étant au maximum égale à 4 mm.

Comme on peut le voir sur la figure 2, l'élément est complètement symétrique par rapport au plan médian perpendiculaire audit verre.

Compte tenu du profil particulier de cet élément, son utilisation s'avère tout à fait ergonomique. En effet, lorsque l'utilisateur a mis en place une monture sur son visage, donc dépourvue de verres correcteurs, l'opticien lui fournit un élément conforme à l'invention, de puissance correctrice correspondant à celle indiquée sur l'ordonnance, ou diminuée ou augmentée d'une unité en fonction du défaut visuel dont il est atteint à savoir myopie, hypermétropie, presbytie ou astigmatisme.

L'utilisateur se saisissant de cet élément par la poignée (1), vient appuyer contre la base inférieure du visage au voisinage du menton et de la joue l'intersection entre la poignée et le bras (4), de sorte que le verre correcteur (6) vient se mettre en place au niveau du verre qu'aurait normalement dû comporter la monture.

De fait, il peut s'observer dans un miroir dans des conditions de vision sinon optimales, du moins largement suffisantes pour pouvoir juger de l'aspect esthétique de la monture sur son visage, et peut, à loisir, marcher, s'éloigner de manière plus ou moins importante dudit miroir de telle sorte à affiner cette analyse dans des conditions normales et courantes d'utilisation et de port des montures.

Compte tenu du profil particulier de l'élément, et notamment de la très faible largeur du bras (4) d'une part, d'autre part, compte tenu du caractère totalement transparent du verre (6), par ailleurs anti-reflets et du polycarbonate constitutif du reste de l'élément, et enfin de par les dimensions dudit élément par rapport à l'oculaire de la monture, et l'inclinaison du bras par rapport à la verticale, ledit élément est quasi-invisible, de sorte que l'utilisateur n'est pas gêné par cet outil correctif, et peut ainsi apprécier tout en étant corrigé, donc disposer d'une vision nette, la monture en place sur son visage.

Ce dispositif est donc d'une grande simplicité d'utilisation. L'opticien dispose d'un ou de plusieurs coffrets de tels éléments, dont la puissance corrective s'étage de dioptrie en dioptrie, voire de demi-dioptrie en demi-dioptrie, voire à intervalle plus réduit, permettant d'offrir à sa clientèle l'outil adapté pour lui permettre de disposer d'une vision nette de l'image réfléchie par la glace lors d'essayage de montures, sans être gênée ni détournée par ledit outil, du fait de sa quasi-invisibilité. Enfin, de par le positionnement quasi-automatique du verre correcteur inhérent au profil particulier dudit élément, son utilisation s'en trouve grandement simplifiée, et ne nécessite pas d'explications particulières.

## Revendications

1. Dispositif de correction de la vue lors de l'essayage d'une monture de lunettes constitué d'un jeu d'éléments de forme identique munis d'une poignée de préhension, ***caractérisé*** en ce que les éléments constitutifs dudit jeu sont sensiblement linéaires, l'une des extrémités formant poignée de préhension (1), et l'autre extrémité (5) recevant un verre correcteur unique (6) de puissance de correction déterminée, dont les dimensions sont telles qu'elles lui permettent de venir se positionner lors de l'essayage en lieu et place du verre définitif à monter au sein de la monture, la puissance correctrice des éléments constituant ledit jeu s'étageant au sein d'un intervalle défini selon une progression également définie.

2. Dispositif de correction de la vue selon la revendication 1, ***caractérisé*** en ce que le verre correcteur (6) est fixé à l'extrémité (5) de l'élément par vissage (9) et/ou par collage au niveau de zone inférieure, ledit verre (6) étant de forme elliptique ou ovale, dont le grand axe est horizontal, de telle sorte à pouvoir être positionné au niveau de la zone correspondant au verre définitif de la monture sans pour autant altérer la portée du champ visuel de l'individu concerné.

3. Dispositif de correction de la vue selon l'une des revendications 1 et 2, ***caractérisé*** en ce que le verre correcteur (6) est réalisé en matière organique incassable et inrayable, et est traité anti-reflets.

4. Dispositif de correction de la vue selon l'une des revendications 1 à 3, ***caractérisé*** en ce que chacun des éléments n'est pas rectilinéaire et comprend trois zones distinctes mais continues, à savoir tout d'abord la poignée de préhension (1), puis la zone de support (5) du verre, ces deux zones étant reliées par une zone intermédiaire formant bras (4).

5. Dispositif de correction de la vue selon la revendication 3, ***caractérisé*** en ce que les trois zones (1, 4, 5) sont réalisées en polymétacrylate de méthyl transparent à la lumière visible.

6. Dispositif de correction de la vue selon l'une des revendications 3 et 4, ***caractérisé*** en ce que les trois zones (1, 4, 5) sont sensiblement linéaires et concourantes, l'angle α formé entre la poignée de préhension (1) et la zone intermédiaire (4) étant compris entre 130 et 150 degrés, et préférentiellement entre 135 et 145 degrés, et l'angle β formé entre la zone intermédiaire (4) et le support (5) du verre correcteur (6) étant compris entre 100 et 120 degrés et avantageusement entre 105 et 115 degrés.

7. Dispositif de correction de la vue selon la revendication 6, ***caractérisé*** en ce que la longueur de la zone intermédiaire (4) est comprise entre 8 et 11 centimètres, et la longueur de la zone de support (5) du verre correcteur (6) est comprise entre 8 et 15 millimètres.

8. Dispositif de correction de la vue selon l'une des revendications 3 à 7, ***caractérisé*** en ce que la poignée de préhension (1) présente une forme plate face à l'utilisateur, et bombée dans la direction opposée.

9. Dispositif de correction de la vue selon l'une des revendications 3 à 8, ***caractérisé*** en ce que la poignée de préhension (1) reçoit une pastille indiquant la valeur algébrique de la puissance correctrice du verre correcteur (6) de l'élément considéré.

## Patentansprüche

1. Vorrichtung zur Sehhilfe für die Anprobe eines Brillengestells, welche aus einem Satz von gleichartig geformten, mit einem Haltegriff versehenen Elementen zusammengesetzt ist,
**dadurch gekennzeichnet,** daß die im oben genannten Satz enthaltenen Elemente im wesentlichen linear sind, wobei ein Ende den Haltegriff (1) bildet, und das andere Ende (5) ein einzelnes Korrekturglas (6) mit einem bestimmten Korrekturvermögen aufnimmt, dessen Ausdehnung derartig gewählt ist, daß eine Positionierung am Ort des im Inneren des Gestells anzubringenden eigentlichen Glases ermöglicht wird, wobei das Korrekturvermögen der Elemente des oben genannten Satzes stufenförmig innerhalb eines definierten Intervalles gemäß einer gleichermaßen definierten Folgeordnung ansteigt.

2. Vorrichtung zur Sehhilfe nach Anspruch 1,
**dadurch gekennzeichnet,** daß das Korrekturglas (6) am Ende (5) des Elementes durch eine Schraubverbindung (9) und/oder eine Klebeverbindung in Höhe des unteren Bereiches befestigt ist, wobei das oben genannte Glas (6) von elliptischer oder ovaler Gestalt ist, dessen große Achse horizontal ausgerichtet ist, derart, um auf Höhe des entsprechenden Bereiches des eigentlichen Glases des Gestells positioniert werden zu können, ohne dafür den Bereich des Sehfeldes der betroffenen Person zu ändern.

3. Vorrichtung zur Sehhilfe nach einem der Ansprüche 1 und 2,
**dadurch gekennzeichnet,** daß das Korrekturglas (6) aus einem organischen, unzerbrechlichen, unzerkratzbaren Material gefertigt und entspiegelt behandelt ist.

4. Vorrichtung zur Sehhilfe nach einem der Ansprüche 1 bis 3,
**dadurch gekennzeichnet,** daß jedes der Elemente nicht geradlinig ausgestreckt ist und drei unterschiedliche aber zusammenhängende Bereiche umfaßt, nämlich zuallererst den Haltegriff (1), dann den Haltebereich des Glases (5), wobei diese beiden Bereiche durch einen einen Arm (4) bildenden Zwischenbereich verbunden sind.

5. Vorrichtung zur Sehhilfe nach Anspruch 3,
**dadurch gekennzeichnet,** daß die drei Bereiche (1, 4, 5) aus für sichtbares Licht durchlässigem Polymethylmetacrylat gefertigt sind.

6. Vorrichtung zur Sehhilfe nach einem der Ansprüche 3 und 4,
**dadurch gekennzeichnet,** daß die drei Bereiche (1, 4, 5) im wesentlichen linear und zusammenwirkend angeordnet sind, wobei der Winkel α, der zwischen dem Haltegriff (1) und dem Zwischenbereich (4) gebildet wird, zwischen 130 und 150 Grad, und vorzugsweise zwischen 135 und 145 Grad liegt, und wobei der Winkel β, der zwischen dem Zwischenbereich (4) und dem Haltebereich (5) des Korrekturglases (6) gebildet wird, zwischen 100 und 120 Grad, und vorteilhaft zwischen 105 und 115 Grad liegt.

7. Vorrichtung zur Sehhilfe nach Anspruch 6,
**dadurch gekennzeichnet**, daß die Länge des Zwischenbereiches (4) zwischen 8 und 11 cm, und die Länge des Haltebereiches (5) des Korrekturglases (6) zwischen 8 und 15 mm liegt.

8. Vorrichtung zur Sehhilfe nach einem der Ansprüche 3 bis 7,
**dadurch gekennzeichnet,** daß der Haltegriff (1) eine mit Blick auf den Benutzer flache Form, und in die entgegengesetzte Richtung bauchige Form aufweist.

9. Vorrichtung zur Sehhilfe nach einem der Ansprüche 3 bis 8,
**dadurch gekennzeichnet,** daß der Haltegriff (1) ein Plättchen aufweist, das den algebraischen Wert des Korrekturvermögens des Korrekturglases (6) des betreffenden Elementes anzeigt.

## Claims

1. Device for correcting sight when trying on spectacle frames, consisting of a set of elements of identical shape, each being provided with a gripping handle, characterized in that the elements constituting said set are substantially linear, one of the ends of which forming a gripping handle (1), and the other end (5) of which receiving a single corrective lens (6) of defined corrective power, whose dimensions are such that they allow it to be positioned, when the frames are being tried on, instead of and in place of the definitive lens to be fitted in the frame, with the corrective power of the assembly of elements which is thus formed extending within a defined range, in a progression which is also defined.

2. Device for correcting sight according to claim 1, characterized in that the corrective lens (6) is fixed at the end (5) of the element by screwing (9) and/or adhesive bonding in the area of its lower zone, said lens (6) being of elliptic or oval shape, the main axis thereof being horizontal, such that it can be positioned in the area of the zone corresponding to the definitive lenses in the frames, without in so doing impairing the range of the field of vision of the individual concerned.

3. Device for correcting sight according to one of claims 1 and 2, characterized in that the corrective lens (6) is made of organic material which is infrangible and scratch-resistant, and it is treated to provide antiglare.

4. Device for correcting sight according to one of claims 1 to 3, characterized in that each one of the elements is nonrectilinear and comprises three distinct but continuous zones, namely, in the first instance, the gripping handle (1), then the zone (5) supporting the lens, these two zones being connected via an intermediate zone forming an arm (4).

5. Device for correcting sight according to claim 3, characterized in that the three zones (1, 4, 5) are made of polymethylmethacrylate transparent to visible light.

6. Device for correcting sight according to one of claims 3 and 4, characterized in that the three zones (1, 4, 5) are substantially linear and convergent, the angle α formed between the gripping handle (1) and the intermediate zone (4) being between 130 and 150 degrees, and preferably between 135 and 145 degrees, and the angle β formed between the intermediate zone (4) and the support (5) for the corrective lens (6) being between 100 and 120 degrees, and advantageously between 105 and 115 degrees.

7. Device for correcting sight according to claim 6, characterized in that the length of the intermediate zone (4) is between 8 and 11 centimeters, and the length of the support zone (5) for the corrective lens (6) is between 8 and 15 millimeters.

8. Device for correcting sight according to one of claims 3 to 7, characterized in that the gripping handle (1) has a flat shape facing the user and a bulged shape in the opposite direction.

9. Device for correcting sight according to one of claims 3 to 8, characterized in that the gripping handle (1) receives a disk indicating the algebraic value of the corrective power of the corrective lens (6) of the element in question.
